# EUROPEAN PATENT APPLICATION

(11) **EP 4 810 277 A1**
(43) Date of publication of application: **23.09.2026**
(21) Application number: 26157034.5
(22) Date of filing: 06.02.2026
(51) Int. Cl.: B60G 17/016, B60G 17/018, B60G 17/08

(54) **EVENT TRIGGERED SUSPENSION CONTROL IN WORK VEHICLES**

(30) Priority: 20.03.2025 US 202563775023 P; 13.01.2026 US 202619447223
(71) Applicant: Deere & Company, Moline, IL 61265-8098 (US); Iowa State University Research Foundation, Inc., Ames, IA 50010 (US)
(72) Inventor: COOK, Jeffrey M., Jesup (US); ADAMS, Bailey J., Ames (US); HUERTA-MUSIL, Joel, Ames (US); TEBBE, Scott A., Cedar Falls (US)
(74) Representative: Reddie & Grose LLP

(57) **Abstract**

Systems, apparatus, articles of manufacture, and methods are disclosed for event triggered suspension control of work vehicles. An example vehicle includes dampers at different locations of a chassis, a sensor, and the programmable circuitry to execute machine-readable instructions to: identify an event based on at least one of data provided by the sensor, the event indicative of a change in motion of the chassis; damping forces to be applied by respective dampers based on the event; and cause the dampers to independently apply the respective damping forces to respective locations of the chassis.

## Description

### RELATED APPLICATION

This patent claims the benefit of U.S. Provisional Patent Application No. 63/775,023, which was filed on March 20, 2025. U.S. Provisional Patent Application No. 63/775,023 is hereby incorporated herein by reference in its entirety. Priority to U.S. Provisional Patent Application No. 63/775,023 is hereby claimed.

### FIELD OF THE DISCLOSURE

This disclosure relates generally to work vehicles and, more particularly, to event triggered suspension control in work vehicles.

### BACKGROUND

Suspension systems for work vehicles are passive in nature and are designed to level out the chassis around a nominal height based on a vehicle weight.

### SUMMARY

Systems, apparatus, articles of manufacture, and methods are disclosed for event triggered suspension control in work vehicles. An example vehicle includes a chassis; a first damper at a first location of the chassis; a second damper at a second location of the chassis; a sensor; machine-readable instructions; and the programmable circuitry to execute the machine-readable instructions to: identify an event based on at least one of data provided by the sensor, the event indicative of a change in motion of the chassis; determine a first damping force to be applied by the first damper based on the event; cause the first damper to apply the first damping force at the first location of the chassis; determine a second damping force to be applied by the second damper based on the event; and cause the second damper to apply the second damping force at the second location of the chassis, the second damping force applied independently of the first damping force.

In one example, the sensor is an inertial measurement unit (IMU) sensor.

In another example, the programmable circuitry is to execute the machine-readable instructions to: determine a roll rate of the chassis; compare the roll rate to a threshold roll rate; and identify the event when the roll rate meets or exceeds the threshold roll rate.

In another example, the threshold roll rate is about four degrees per second.

In another example, the programmable circuitry is to execute the machine-readable instructions to: determine a pitch rate of the chassis; compare the pitch rate to a threshold pitch rate; and identify the event when the pitch rate meets or exceeds the threshold pitch rate.

In another example, the threshold pitch rate is about four degrees per second.

In another example, the programmable circuitry is to execute the machine-readable instructions to: determine a yaw rate of the chassis; compare the yaw rate to a threshold yaw rate; and identify the event when the yaw rate meets or exceeds the threshold yaw rate.

In another example, the threshold yaw rate is about four degrees per second.

In another example, the programmable circuitry is to execute the machine-readable instructions to: determine a deceleration rate or an acceleration rate of the chassis; compare the deceleration rate or the acceleration rate to a threshold rate; and identify the event when the deceleration rate or the acceleration rate meets or exceeds the threshold rate.

In another example, the threshold rate is about two meters per second squared.

In another example, the programmable circuitry is to execute the machine-readable instructions to suspend application of skyhook suspension control when the event is identified.

In another example, the first damping force and the second damping force are different.

An example non-transitory machine-readable storage medium includes instructions that, when executed, cause at least one processor circuit to: identify an event based on data provided by a sensor coupled to a vehicle, the event indicative of a change in motion of a chassis of the vehicle; determine a first damping force to be applied by the first damper based on the event; cause the first damper to apply the first damping force at the first location of the chassis; determine a second damping force to be applied by the second damper based on the event; and cause the second damper to apply the second damping force at the second location of the chassis, the second damping force applied independently of the first damping force.

In one example, the instructions, when executed, are to cause the at least one processor circuit to: determine a rate of change of a position of the chassis; compare the rate of change to a threshold rate; and identify the event when the rate of change meets or exceeds the threshold rate.

In another example, the rate of change of the position of the chassis includes at least one of a roll rate of the chassis, a pitch rate of the chassis, or a yaw rate of the chassis, and the threshold rate is about four degrees per second.

In another example, the instructions, when executed, are to cause the at least one processor circuit to: determine a deceleration rate or an acceleration rate of the chassis; compare the deceleration rate or the acceleration rate to a threshold rate; and identify the event when the deceleration rate or the acceleration rate meets or exceeds the threshold rate.

In another example, the threshold rate is about two meters per second squared.

In another example, the instructions, when executed, are to cause the at least one processor circuit to suspend application of skyhook suspension control when the event is identified.

An example method to stabilize a vehicle chassis includes identifying an event based on data provided by a sensor coupled to a vehicle, the event indicative of a change in motion of a chassis of the vehicle; determining a first damping force to be applied by the first damper based on the event; causing the first damper to apply the first damping force at the first location of the chassis; determining a second damping force to be applied by the second damper based on the event; and causing the second damper to apply the second damping force at the second location of the chassis, the second damping force applied independently of the first damping force.

In one example, the method includes identifying the event based on an inertial measurement of the chassis.

Example machine-readable storage includes machine-readable instructions, that when executed, implement a method or realize an apparatus as recited in any preceding example.

### BRIEF DESCRIPTION OF THE DRAWINGS

FIG. 1 illustrates an example agricultural sprayer including a tractor and a sprayer implement.
FIG. 2 illustrates an example tractor of the agricultural sprayer of FIG. 1 including an example active suspension control system and without the sprayer implement shown.
FIG. 3 is a block diagram of an example implementation of suspension control circuitry of the active suspension control system of FIG. 2.
FIG. 4 generally illustrates an example skyhook suspension control system.
FIG. 5 is a flowchart representative of example machine-readable instructions and/or example operations that may be executed, instantiated, and/or performed by example programmable circuitry to implement the suspension control circuitry of FIG. 3.
FIG. 6 is a block diagram of an example processing platform including programmable circuitry structured to execute, instantiate, and/or perform the example machine-readable instructions and/or perform the example operations of FIG. 5 to implement the suspension control circuitry of FIG. 3.

In general, the same reference numbers will be used throughout the drawing(s) and accompanying written description to refer to the same or like parts. The figures are not necessarily to scale.

### DETAILED DESCRIPTION

Heavy equipment or work vehicles such as off-road vehicles, agricultural vehicles, construction vehicles, and road maintenance vehicles include suspension control to cushion or damp movement of the chassis of the vehicle. Example work vehicles include tractors, combine harvesters, forage harvesters, sugarcane harvesters, seed drills, field sprayers, loaders, telescopic handlers, backhoes, excavators, graders, feller bunchers, forwarders, log loaders, skidders, dump trucks, cranes, etc. Chassis movement can be caused by traversal of the vehicle across terrain (e.g., a field) and by operation of the work vehicle or an attachment or implement connected to the work vehicle. Example work vehicle implements include seeders, spreaders, round balers, sprayers, tillage, headers for combine harvesters, windrower headers, buckets, sweepers, rollers, blades, jackhammers, booms, etc.

A chassis of a work vehicle, such as an agricultural sprayer, experiences changes of mass at locations such as corners of the chassis, referred to herein as corner mass, during deployment, or unfolding, of a sprayer boom and with movement of a volume of liquid in a tank. The change in mass causes the chassis to rock or otherwise move. Excessive chassis movement can jostle or otherwise cause discomfort to an operator in a cab of the vehicle and may compromise performance of the work vehicle for its intended purpose. Operator discomfort and compromised vehicle performance can limit the duration for which the work vehicle is operated. Compromised vehicle performance can cause damage to the vehicle or the implement and/or negatively affect the performance of the implement such as spray quality.

Some vehicle chassis suspension controls mechanically adjust hydraulic cylinder pressures or air spring pressure to re-level the chassis and compensate for movement caused by changes to corner mass. However, known systems typically include a mechanical spring having a single acting spring rate or force curve. Examples disclosed herein improve known systems and can compensate for rapidly adjusting forces during in-field dynamic conditions to actively control unwanted chassis suspension dynamics and overall vehicle instability.

Examples disclosed herein actively and independently control suspension systems at different locations of a chassis of a work vehicle. For example, variable hydraulic damper components are actively controlled to apply a variable force on respective independent corner chassis suspension systems of a work vehicle such as an agricultural sprayer with boom platforms. Examples disclosed herein incorporate mechanical and/or hydraulic active damping components, sensors, programmable controllers, and logic to intelligently change the damping force of the dampers as a function of dynamic, in-field conditions and operating states of the work vehicle and/or implements connected to the work vehicle.

Examples disclosed herein enable a continuous and rapid change of damping force imparted on the chassis suspension system. The damping force can be optimized based on normal in-field conditions, fluctuating in-field conditions, and/or operating conditions that pose instability challenges for the work vehicle and implements connected to the work vehicle.

Examples disclosed herein control suspension to reduce work vehicle in-cab accelerations and provide improved operator comfort and health. Improved operator comfort reduces operator fatigue, which enables increased daily operating hours. In the context of an agricultural sprayer, increased operating hours are particularly beneficial during peak, busy seasons when products are applied to fields.

Examples disclosed herein control suspension to increase work vehicle stability. Smoother chassis suspension dynamics improve overall vehicle ride characteristics and help stabilize vehicles. In the context of an agricultural sprayer, substantial sloshing of liquid can occur in the solution tank, which shakes the work vehicle. The example suspension controls systems disclosed herein mitigate the shaking.

Examples disclosed herein control suspension to aid control over implements. For example, considering an agricultural sprayer, improvements in control of the vehicle suspension decrease the likelihood that unwanted disturbances or other chassis movements are propagated to and affect the boom platform on the back end of the work vehicle. Thus, examples disclosed herein enhance control over boom height and increase boom height stability. A stable boom improves the effectiveness of an agricultural sprayer including, for example, at higher application speeds.

Examples disclosed herein implement multiple suspension control operations. For example, skyhook suspension control is used in combination with an event triggered suspension control. Skyhook suspension control is based on a concept that a chassis of a vehicle remains stable as if suspended from an imaginary hook in the sky. Event triggered suspension control is based on the detection of events related to the movement and orientation of the chassis. Further details related to both skyhook suspension control and event triggered suspension control are provided below. The use of skyhook suspension control combined with event triggered suspension control optimizes the variable output damping forces around the chassis and maximizes work vehicle stability across a wide array of field and road conditions.

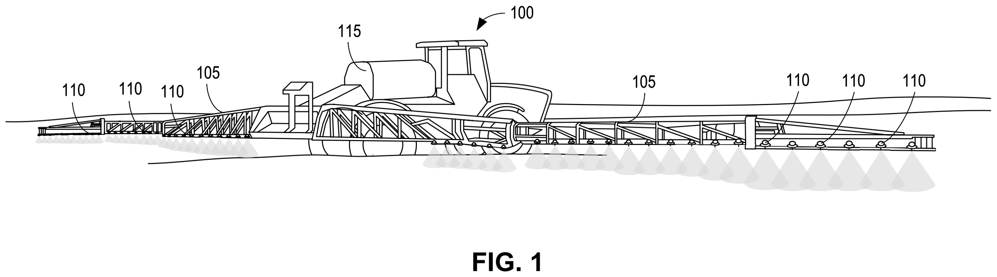

FIG. 1 illustrates an example vehicle 100 and example implement 105. In this example, the vehicle 100 is an agricultural sprayer. In this example, the implement 105 is a sprayer boom. Though an agricultural sprayer is illustrated in FIG. 1 and discussed throughout this disclosure, the suspension controls disclosed herein are applicable to all work vehicle types.

Agricultural sprayers are used to apply a spray of a liquid (e.g., fertilizer, fungicides, and/or other products) to a field using nozzles 110 mounted on the boom 105. The booms 105 on many agricultural sprayers 100 have dynamics of a flexible beam and are susceptible to vibration or other undesired movements.

To spray the liquid, the agricultural sprayer 100 includes a pump that pumps the liquid from a reservoir or tank 115 to the nozzles 110 mounted on the boom 105. The spray is controlled to deliver a target application to the agricultural field. For example, the liquid can be delivered to a particular dispersal area, such as directly on a crop or weed, in between plants, etc. The liquid can be delivered at a specified rate so that a target quantity of the liquid is applied to the dispersal area. Deviations from a prescribed application of the liquid can result in the liquid being applied to unintended areas and/or in incorrect amounts. For example, unevenly applied fertilizer is wasted in areas of over-application, and ineffective in areas of under-application.

In the illustrated example, the longitudinal axis of the boom 105 is perpendicular to the direction of travel of the agricultural sprayer 100 across the field. As the agricultural sprayer 100 traverses across the field, disturbances such as changes in wheel height due to ground level changes, impact with objects such as rocks, tree roots, etc., and/or wind can cause the boom 105 to vibrate. Boom vibration affects the boom position and orientation, and adversely affects the spraying performance. Changes in boom position and orientation changes the vertical position of the nozzles 110, and the distance of the nozzles 110 to the dispersal area in the field. In addition, when turning the agricultural sprayer 100, centrifugal force can cause movement of the boom 105, and thus the nozzles 110 mounted on the boom 105. Changes in the chassis height and turning of the agricultural sprayer 100 can also cause sloshing of a volume of liquid in the tank 115. Sloshing liquid can also affect the boom position and orientation.

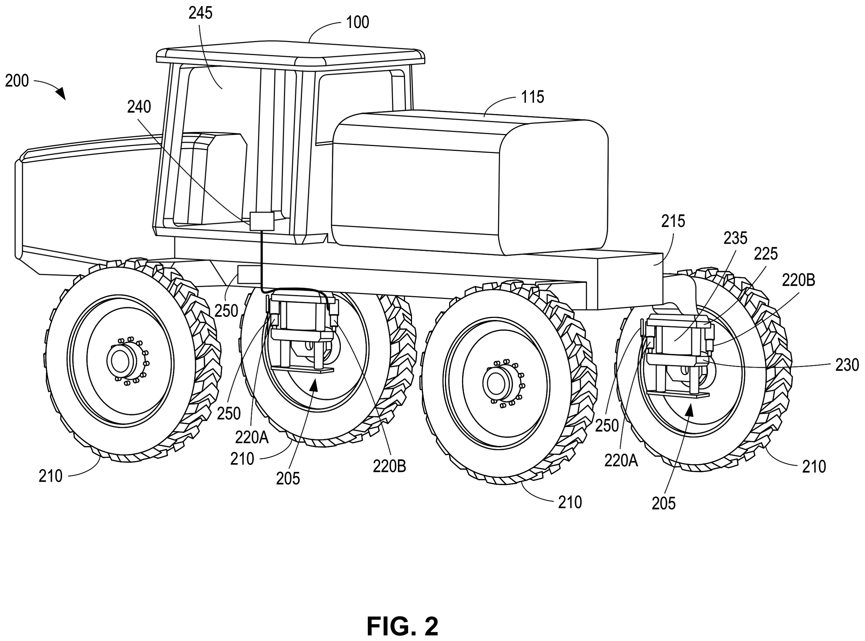

Suspension controls are used to mitigate vibration in the boom 105 and sloshing of liquid in the tank 115. FIG. 2 illustrates an example tractor or work vehicle 200 for the agricultural sprayer 100 of FIG. 1 with an example active suspension control system 205. The boom 105 is not shown in FIG. 2 for clarity. The work vehicle 200 has four wheels 210. In the illustrated example, there are elements of the active suspension control system 205 at each of the wheels 210, as described below. Thus, there are elements of the active suspension control system 205 at different locations (e.g., corners) of a chassis 215 of the work vehicle 200. Active suspension control systems are suspension and damping systems that cushion or damp movement between a first part (e.g., the chassis 215) and a second part (e.g., one or more wheels 210) of the work vehicle 200. The work vehicle 200 of the example of FIG. 2 has four wheels. The suspension controls disclosed herein may be used with vehicles with other drive forms including, for example, three wheeled vehicles, tracked systems, etc.

The active suspension control system 205 includes an example first active damper 220A and an example second active damper 220B. In some examples, the first active damper 220A and the second active damper 220B includes a hydraulic damper. The first active damper 220A and the second active damper 220B are coupled between a sprung mass 225 (e.g., an axle knee casting or axle knee weldment coupled to the chassis 215) and an unsprung mass 230 (e.g., a wheel motor casting coupled to the wheel 210). In some examples, the active suspension control system 205 includes one of the first active damper 220A or the second active damper 220B. In some examples, the work vehicle 200 includes an example air spring 235. In the illustrated example, the air spring 235 is positioned between the first active damper 220A and the second active damper 220B. The air spring 235 is incorporated in a mechanical leveling valve system that assists in suspension control and stabilization of the chassis 215.

The work vehicle 200 includes an example electronic controller 240. In the illustrated example, the electronic controller 240 is positioned in a cab 245 of the work vehicle 200 for access by an operator. The electronic controller 240 can include input interfaces (e.g., keys, dials, buttons, switches, a touch screen, a microphone, etc.) for an operator to provide information and/or commands. The electronic controller 240 also includes an output interface (e.g., a display, speakers, etc.) to provide information to the operator. The electronic controller 240 is coupled to the first active damper 220 and the second active damper 220B. In some examples, the electronic controller 240 is part of the active suspension control system 205.

The work vehicle 200 includes a plurality of sensors 250 that are coupled to the electronic controller 240. Some of the sensors 250 may detect suspension displacement and/or a position and/or motion of the work vehicle 200 and/or the chassis 215 including velocity, linear acceleration, angular acceleration, levelness of the chassis, rotation, etc. The sensors 250 include inertial measurement unit (IMU) sensors. The work vehicle 200 can include additional sensors 250 to detect a liquid level in the tank 115, a movement of a volume of liquid in the tank 115, a position of the boom 105 (folded, unfolded, partially unfolded, height, angle, etc.), torque on an axle, signals from a transmission control module, signals from a powertrain control module, signals from hydrostatic drive controls, depression of a brake pedal, depression of an accelerator pedal, wind speed, wind direction, steering angle, etc.

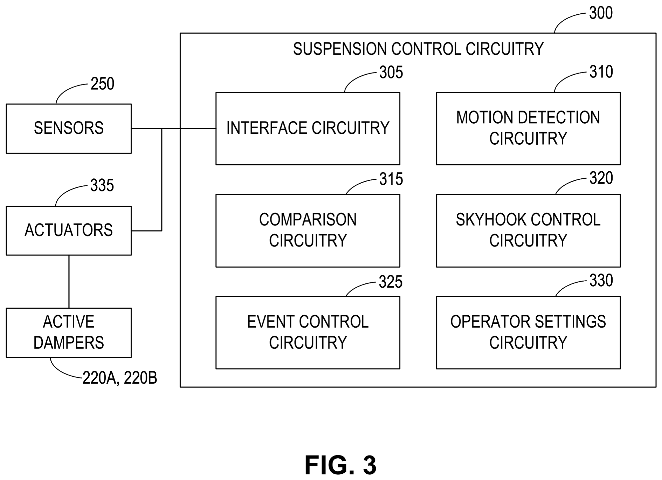

The active suspension control system 205 activates the first active damper 220A and the second active damper 220A to mitigate movement of the chassis 215 based on data gathered by, generated by, or otherwise provided by one or more of the sensors 250. FIG. 3 is a block diagram of an example implementation of suspension control circuitry 300 of the active suspension control system 205 of FIG. 2. The suspension control circuitry 300 is used to implement active chassis suspension control of the agricultural sprayer 100 to maximize vehicle stability and minimize boom excitation. The suspension control circuitry 300 can be implemented via the active suspension control system 205 (e.g., at the electronic controller 240).

The suspension control circuitry 300 includes example interface circuitry 305, example motion detection circuitry 310, example comparison circuitry 315, example skyhook control circuitry 320, example event control circuitry 325, and example operating settings circuitry 330.

The interface circuitry 305 obtains, retrieves, receives, and/or otherwise accesses data gathered by and/or generated by the sensors 250. For example, the interface circuitry 305 obtains data from the sensors 250 that measures displacement of the chassis 215. In some examples, the interface circuitry 305 obtains data related to movement of the work vehicle 200, the chassis 215, and/or the boom 105. In some examples, the interface circuitry 305 obtains other data disclosed herein.

The motion detection circuitry 310 identifies motion of the chassis 215. For example, the motion detection circuitry 310 identifies motion of the chassis 215 based on data from the sensors 250 associated with displacement of the chassis 215, acceleration of the chassis 215, a velocity of the agricultural sprayer 100, deployment or other position of the boom 105, sloshing of liquid in the tank 115, etc. The motion detection circuitry 310 detects motion of the chassis 215 at a location associated with the active suspension control system 205. Thus, for example, the motion detection circuitry 310 detects motion of the chassis 215 at one or more of the corners of the chassis 215. In some examples, the motion detection circuitry 310 detects motion of the chassis 215 at multiple locations (e.g., multiple corners) of the chassis 215. The sensors 250 include suspension displacement sensors and IMUs. In some examples, there are multiple suspension displacement sensors and multiple IMUs. For example, the sensors 250 can include four suspension displacement sensors with one at each of the wheels 210. In some examples, the sensors 250 include four IMUs. In other examples, the sensors 250 include other numbers of IMUs such as one, two, three, etc. In some examples, the motion is indicative of an instability of the chassis 215, the work vehicle 200, and/or the boom 105.

The motion detection circuitry 310 detects different types of motion. The motion detection circuitry 310 detects inertial measurements. The motion detection circuitry 310 detects rates of change of a position or orientation of the chassis 215, any implement such as the boom 105, and/or the work vehicle 200 in general. The motion detection circuitry 310 detects roll, pitch, and yaw of the chassis 215, any implement such as the boom 105, and/or the work vehicle 200 in general. The motion detection circuitry 310 detects acceleration and deceleration of the chassis 215, any implement such as the boom 105, and/or the work vehicle 200 in general.

The comparison circuitry 315 compares the motion to thresholds. For example, when the motion is velocity or a vehicle speed, the comparison circuitry 315 compares the measured speed to a threshold speed. When the motion is an inertial measurement, the comparison circuitry 315 compares the inertial measurement to a threshold inertial measurement. When the motion is a rate of change of a position or orientation of the chassis 215, the comparison circuitry 315 compares the measured a rate of change of a position or orientation of the chassis 215 to a threshold a rate of change of a position or orientation of the chassis 215. When the motion is a roll rate, the comparison circuitry 315 compares the measured roll rate to a threshold roll rate. When the motion is a pitch rate, the comparison circuitry 315 compares the measured pitch rate to a threshold pitch rate. When the motion is a yaw rate, the comparison circuitry 315 compares the measured yaw rate to a threshold yaw rate. When the motion is acceleration (linear or angular), the comparison circuitry 315 compares the measured acceleration to a threshold acceleration. When the motion is deceleration (linear or angular), the comparison circuitry 315 compares the measured deceleration to a threshold deceleration. Different threshold values may be applied and used by the comparison circuitry 315 based on the different motions analyzed. For example, a threshold rate of greater than or equal to about 4 degrees per second in either direction may be used when comparing a rate of change of a position or orientation of the chassis 215, a roll rate, a pitch rate, and/or a yaw rate. A threshold rate of greater than or equal to about 2 meters per second squared may be used when comparing an acceleration rate. A threshold rate of less than or equal to about -2 meters per second squared (i.e., a magnitude of 2 meters per second squared) may be used when comparing a deceleration rate. In other examples, other values may be used based on one or more of a vehicle type, an implement type, a field type, field topography, weather, an operator preference setting, an operator experience level, etc.

The results of the comparison(s) are indicative of the stability or instability of the chassis 215, the work vehicle 200, and/or the boom 105. In some examples, when the threshold values are not satisfied or exceeded, the skyhook control circuitry 320 of the suspension control circuitry 100 controls the suspension of the chassis 215, the work vehicle 200, and/or the boom 105 via skyhook control. With skyhook control, suspension velocities of the chassis 215 are sensed through the sensors 250 (e.g., displacement sensors) and accelerations of the chassis 215 are sensed through the sensors 250 (e.g., IMU sensors) at different locations of the chassis 215. For example, the velocities and accelerations are sensed at respective corners of the chassis 215. In some examples, the velocities and accelerations are independently sensed. The skyhook control circuitry 320 continuously adjusts a corresponding variable damping force of one or more of the active dampers 220A, 220B at the respective locations (e.g., corners) of the chassis 215.

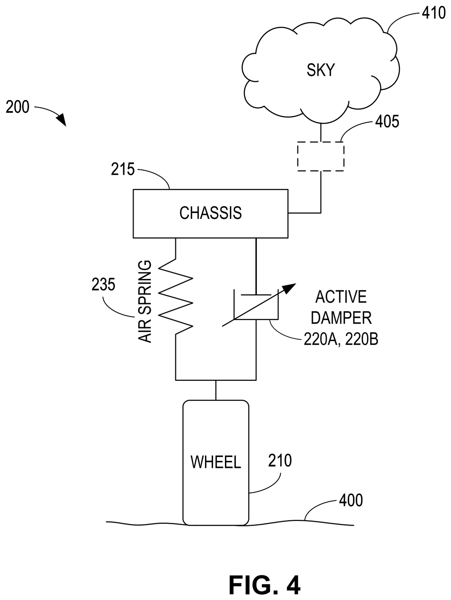

The skyhook control circuitry 320 identifies vertical velocities at different locations of the chassis 215. The skyhook control circuitry 320 determines, identifies, or calculates a damping force to apply to the locations of the chassis 215 to counteract the vertical velocities so that the chassis 215 remains stable despite irregularities in the surface of the ground 400 (e.g., road or field). As illustrated in FIG. 4, the damping forces of the active dampers 220A, 220B and the air spring 235 maintain the stability of the chassis 215 as if the work vehicle 200 were suspended by a hook 405 in the sky 410 (i.e., an imaginary reference point above the chassis 215). The damping forces are calculated by the skyhook control circuitry 320 by simulating a connection between the chassis 215 and the hook 405 while maintaining a constant vertical acceleration over a changing surface of the ground 400. The damping forces of the active dampers 220A, 220B are adjusted by the skyhook control circuitry 320 so that irregular ground topography does not affect the stability of the chassis 215. The skyhook control strategy stabilizes the work vehicle 200 throughout typical field operations.

In some examples, when the threshold values are satisfied or exceeded, an event is identified. An event is indicative of a change in motion of the chassis 215. In some examples, an event is indicative of a field operation in which one or more measured values of the position, motion, and/or orientation of the chassis 215, the work vehicle 200, and/or an implement such as the boom 105 indicate a possible unstable posture. When an event is identified, the suspension control circuitry 300 controls the suspension of the chassis 215, the work vehicle 200, and/or the boom 105 via event triggered control.

Event triggered control includes, for example, high roll rate or pitch rate control, turn control, and rapid acceleration or deceleration control. With high roll rate or pitch rate control, the event control circuity 325 detects aggressive high amplitude, low frequency field events (e.g., terraces, waterways, etc.) and correspondingly increases damping forces to stabilize the work vehicle 200. With turn control, the event control circuity 325 detects turn events (e.g., avoiding headlands, road swerving, S-ing behavior, etc.) and related yaw rates and increases damping forces on selected independent suspension locations (e.g., corners) of the chassis 215 to level or stabilize out the chassis 215 and prevent over-roll behavior. With rapid acceleration or deceleration control, the event control circuity 325 increases suspension damping forces to reduce excessive over-pitch behavior during events such as significant longitudinal accelerations (e.g., rapid takeoff, etc.) or longitudinal decelerations (e.g., braking, etc.) induced on the road or in the field.

To effect damping forces to be applied to the chassis 215 during event triggered control, the event control circuity 325 identifies a damping force for application by the first active damper 220A and the second active damper 220B based on one or more of motion detected by the motion detection circuitry 310, a comparison made by the comparison circuitry 315, and resulting event determination. In some examples, the event control circuity 325 identifies the damping force based on multiple types of motion and/or events. For example, the event control circuity 325 identifies a force to apply to one or more of the first active damper 220A or the second active damper 220B that is proportional to the motion. For example, the greater the chassis suspension motion, the greater the damping force to mitigate the effects of the motion. The damping force is to change a height of the location of the chassis 215 associated with the motion. In some examples, the height of the location of the chassis 215 is changed relative to the wheel 210. Effectively, the damping force is identified to smooth the motion and stabilize the chassis 215.

In some examples, the event control circuity 325 identifies the damping force and/or adjusts an identified damping force based on an operator setting. Some operators may tolerate a more aggressive ride than other operators. For example, some operators may handle more juddering or rocking than other operators without experiencing fatigue. The operator setting can be based on operator preference and/or operator physiology. The operator settings is accessed or determined by the operating settings circuitry 330.

In some examples, the event control circuity 325 identifies different damping forces for different locations of the chassis 215. Different areas of the chassis 215 may experience different motion and events, and different damping forces to counteract the motion and events are applied to the different locations. For example, the location of the chassis 215 near a pivot at which the boom 105 is deployed will experience different motion than a location distal to the pivot. In another example, a front of the chassis 215 experiences different motion than a rear of the chassis 215 during sudden deceleration. In some examples, the event control circuity 325 identifies damping forces for different locations of the chassis 215 independently. In other words, event control circuity 325, in some examples, identifies a damping force at a first corner or other location of the chassis 215 without regard to the damping force identified for a second corner or other location of the chassis 215.

In some examples, the skyhook control circuitry 320 and the event control circuitry 325 monitor motion of the chassis 215, work vehicle 200, and/or implements (e.g., the boom 105) in parallel (i.e., simultaneously or substantially simultaneously). However, control of the suspension of the chassis 215 occurs in series (i.e., either via the skyhook control circuitry 320 or the event control circuitry 325). For example, the skyhook control circuitry 320 may provide suspension control until an event is detected based on motion of the chassis 215, the work vehicle 200, and/or the implements (e.g., the boom 105). When an event is detected, the suspension control circuitry 300 suspends application of skyhook suspension control and switches to event triggered suspension control. Thus, a first suspension control method (e.g., skyhook) and a second suspension control method (e.g., event triggered) act in parallel to each other from a control detection and reaction perspective, but only one of the two control methods actively changes the variable damping force output at any given time.

The identified damping forces are included in a command signal that the suspension control circuitry 300 communicates via the interface circuitry 305 to one or more actuators 335. The actuators effect the command signal by causing one or more of the first active damper 220A and the second active damper 220B to apply the identified damping force to the associated location of the chassis 215. In examples with hydraulic dampers, the actuators 335 may change a position of a valve in one or more of the active dampers 220A, 220B to control a rate of fluid flowing through a piston in the active damper 220A, 220B. In some examples, the first active damper 220A and the second active damper 220B are orientated such that one extends while the other compresses. In such examples, the damping force identified by the event control circuitry 325 is to extend one of the active dampers 220A, 220B while compressing the other of the active dampers 220B, 220A. In other words, the actuators 335 cause extension of one of the active dampers 220A, 200B and compression of the other one of the active dampers 220B, 220A based on the force command.

In some examples, a damping force is not identified when the work vehicle 200 is moving at a low speed. For example, if and/or when the comparison circuitry 315 compares the speed of the chassis 215 or the work vehicle 200 to a threshold speed, and the speed does not exceed the threshold speed, the suspension control circuitry 300 identifies the work vehicle 200 as moving slowly, and that there is no need to identify any damping forces. In some examples, the threshold speed is 1 mile per hour. Thus, in such examples, the skyhook control circuitry 320 or the event control circuitry 325 identifies damping forces for one or more areas of the chassis 215 when the speed of the chassis 215 or the work vehicle 200 exceeds the threshold speed.

FIG. 3 is a block diagram of an example implementation of the suspension control circuitry 300. The suspension control circuitry 300 of FIG. 3 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the suspension control circuitry 300 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

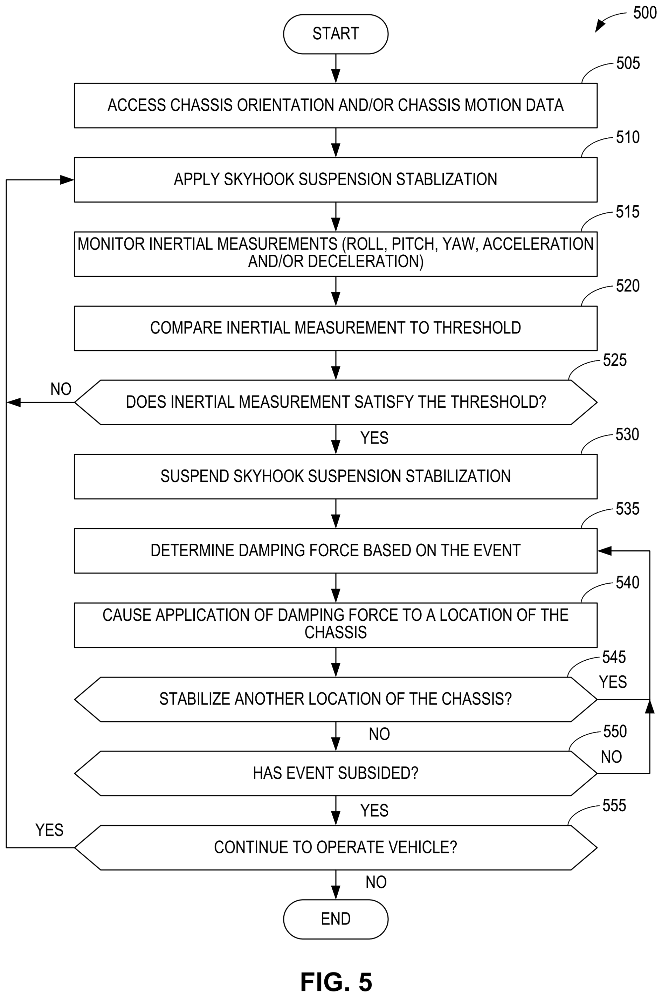

In some examples, the suspension control circuitry 300 is instantiated by programmable circuitry executing suspension control instructions and/or configured to perform operations such as those represented by the flowchart(s) of FIG. 5.

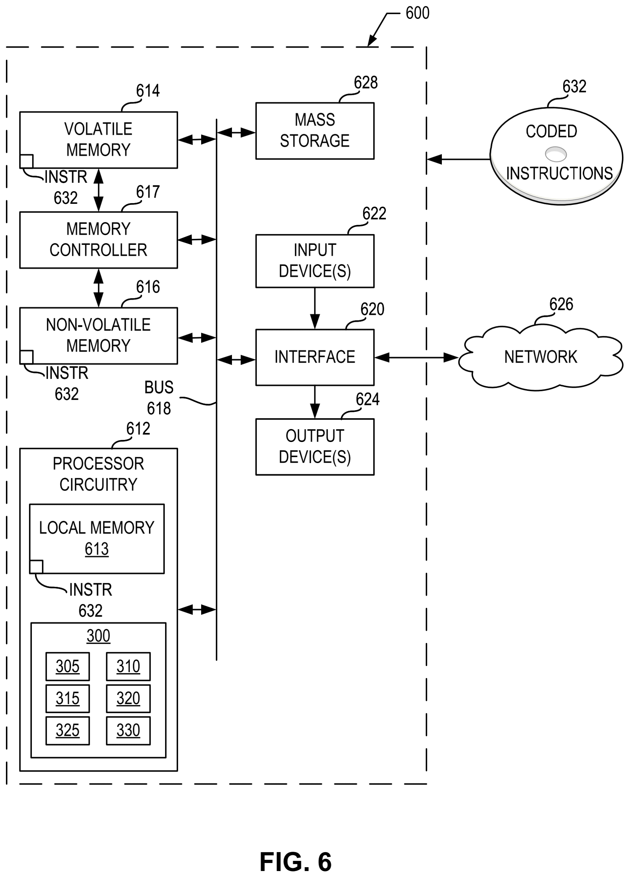

In some examples, the suspension control circuitry 300 includes means for controlling suspension of a vehicle. In some examples, the suspension control circuitry 300 may be instantiated by programmable circuitry such as the example programmable circuitry 612 of FIG. 6. For instance, the suspension control circuitry 300 may be instantiated by the example microprocessor executing machine executable instructions such as those implemented by the operations of FIG. 5. In some examples, the suspension control circuitry 300 may be instantiated by hardware logic circuitry, which may be implemented by an ASIC, XPU, or the FPGA circuitry configured and/or structured to perform operations corresponding to the machine-readable instructions. Additionally or alternatively, the suspension control circuitry 300 may be instantiated by any other combination of hardware, software, and/or firmware. For example, the suspension control circuitry 300 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the suspension control circuitry 300 is illustrated in FIG. 3, one or more of the elements, processes, and/or devices illustrated in FIG. 3 may be combined, divided, re-arranged, omitted, eliminated, and/or implemented in any other way. Further, the example interface circuitry 305, the example motion detection circuitry 310, the example comparison circuitry 315, the example skyhook control circuitry 320, the example event control circuitry 325, the example operator settings circuitry 330, and/or, more generally, the example suspension control circuitry 300 of FIG. 3, may be implemented by hardware alone or by hardware in combination with software and/or firmware. Thus, for example, any of the example interface circuitry 305, the example motion detection circuitry 310, the example comparison circuitry 315, the example skyhook control circuitry 320, the example event control circuitry 325, the example operator settings circuitry 330, and/or, more generally, the example suspension control circuitry 300, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine readable instructions (e.g., firmware or software). Further still, the example suspension control circuitry 300 of FIG. 3 may include one or more elements, processes, and/or devices in addition to, or instead of, those illustrated in FIG. 3, and/or may include more than one of any or all of the illustrated elements, processes and devices.

Flowchart(s) representative of example machine-readable instructions, which may be executed by programmable circuitry to implement and/or instantiate the suspension control circuitry 300 of FIG. 3 and/or representative of example operations which may be performed by programmable circuitry to implement and/or instantiate the suspension control circuitry 300 of FIG. 3, are shown in FIG. 5. The machine-readable instructions may be one or more executable programs or portion(s) of one or more executable programs for execution by programmable circuitry such as the programmable circuitry 612 shown in the example processor platform 600 discussed below in connection with FIG. 6 and/or may be one or more function(s) or portion(s) of functions to be performed by the example programmable circuitry (e.g., an FPGA). In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIG. 5, many other methods of implementing the example suspension control circuitry 300 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, GPUs, VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C-sharp, Perl, Python, JavaScript, HyperText Markup Language (HTML), Structured Query Language (SQL), Swift, etc.

As mentioned above, the example operations of FIG. 5 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 5 is a flowchart representative of example machine-readable instructions and/or example operations 500 that may be executed, instantiated, and/or performed by programmable circuitry to suspension control of work vehicles. The example machine-readable instructions and/or the example operations 500 of FIG. 5 include the interface circuitry 305 of the suspension control circuitry 300 accessing chassis orientation and/or chassis motion data (block 505). The suspension control circuitry 300 using the skyhook control circuitry 320 initially controls the suspension of the chassis 215 via skyhook control or skyhook suspension stabilization (block 510).

The motion detection circuitry 310 monitors inertial measurements including, for example, roll, pitch, yaw, acceleration, and/or deceleration (block 515). The comparison circuitry 315 compares an inertial measurement to a threshold (block 520). The comparison circuitry 315 determines if the inertial measurement satisfies the threshold (block 525). If and/or when the inertial measurement does not satisfy the threshold (block 525: NO), the suspension control circuitry 300 determines that an event has not occurred and the application of skyhook suspension stabilization continues (block 510).

If and/or when the inertial measurement does satisfy the threshold (block 525: YES), the suspension control circuitry 300 determines that an event has occurred and suspends skyhook suspension stabilization (block 530). When skyhook suspension stabilization is suspended, the suspension control circuitry 300 continues with event triggered control or event triggered suspension stabilization. Specifically, the event control circuitry 325 determines damping force(s) based on the event (block 535).

The suspension control circuitry 300 causing (e.g., via the actuators 335) application of the damping force at a location of the chassis (block 540). The event control circuitry 325 determines if there are other events. That is, the event control circuitry 325 determines if there is another location of the chassis 215 to stabilize (block 545). If and/or when there is another location of the chassis 215 to stabilize (block 545: YES), the process 500 continues with the event control circuitry 325 determining damping force(s) based on the event (block 535).

If and/or when event control circuitry 325 determines if there is not another location of the chassis 215 to stabilize (block 545: NO), the event control circuitry 325 determines if the event has subsided (block 550). If and/or when the event has not subsided (block 550: NO), the process 500 continues with the event control circuitry 325 determining damping force(s) based on the event (block 535). As disclosed herein, the order of the operation of the instructions in the process 500 of FIG. 5 may be rearranged. For example, the event control circuitry 325 can independently monitor events at different location of the chassis 215, and the event control circuitry 325 can simultaneously monitor events at different locations of the chassis 215. Thus, the order of the instructions in the blocks of the process 500 of FIG. 5 does not mandate that the event control circuitry 325 and the suspension control circuitry 300, in general, operate in a particular sequence such as illustrated in FIG. 5. For example, the event control circuitry 325 may assess if an event has subsided (block 550) prior to determining if there is another location of the chassis to stabilize (block 545).

If and/or when the event control circuitry 325 determines that the event has subsided (block 550: YES), the process 500 continues with the suspension control circuitry 300 determining if the work vehicle 200 is continuing to operate (block 555). If and/or when the work vehicle 200 is continuing to operate (block 555: YES), the process 500 continues with the application of skyhook suspension stabilization (block 510). If and/or when the work vehicle 200 is not continuing to operate (block 555: NO), the process 500 ends.

FIG. 6 is a block diagram of an example programmable circuitry platform 600 structured to execute and/or instantiate the example machine-readable instructions and/or the example operations of FIG. 5 to implement the suspension control circuitry 300 of FIG. 3. The programmable circuitry platform 600 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device.

The programmable circuitry platform 600 of the illustrated example includes programmable circuitry 612. The programmable circuitry 612 of the illustrated example is hardware. For example, the programmable circuitry 612 can be implemented by one or more integrated circuits, logic circuits, FPGAs, microprocessors, CPUs, GPUs, VPUs, DSPs, and/or microcontrollers from any desired family or manufacturer. The programmable circuitry 612 may be implemented by one or more semiconductor based (e.g., silicon based) devices. In this example, the programmable circuitry 612 implements the suspension control circuitry 300, the interface circuitry 305, the motion detection circuitry 310, the comparison circuitry 315, the skyhook control circuitry 320, the event control circuitry 325, and the operator settings circuitry 330.

The programmable circuitry 612 of the illustrated example includes a local memory 613 (e.g., a cache, registers, etc.). The programmable circuitry 612 of the illustrated example is in communication with main memory 614, 616, which includes a volatile memory 614 and a non-volatile memory 616, by a bus 618. The volatile memory 614 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 616 may be implemented by flash memory and/or any other desired type of memory device. Access to the main memory 614, 616 of the illustrated example is controlled by a memory controller 617. In some examples, the memory controller 617 may be implemented by one or more integrated circuits, logic circuits, microcontrollers from any desired family or manufacturer, or any other type of circuitry to manage the flow of data going to and from the main memory 614, 616.

The programmable circuitry platform 600 of the illustrated example also includes interface circuitry 620. The interface circuitry 620 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 622 are connected to the interface circuitry 620. The input device(s) 622 permit(s) a user (e.g., a human user, a machine user, etc.) to enter data and/or commands into the programmable circuitry 612. The input device(s) 622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 624 are also connected to the interface circuitry 620 of the illustrated example. The output device(s) 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 600 of the illustrated example also includes one or more mass storage discs or devices 628 to store firmware, software, and/or data. Examples of such mass storage discs or devices 628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 632, which may be implemented by the machine-readable instructions of FIG. 5, may be stored in the mass storage device 628, in the volatile memory 614, in the non-volatile memory 616, and/or on at least one non-transitory computer readable storage medium such as a CD or DVD which may be removable.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real-world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that actively control suspensions in work vehicles such as agricultural sprayers. Disclosed systems, apparatus, articles of manufacture, and methods improve the operation of such work vehicles and implements. Examples disclosed intelligently change the damping force at different areas of a vehicle chassis based on vehicle operating conditions, environmental conditions, and/or operator preference using skyhook suspension control in combination with an event triggered suspension control. The use of multiple types of suspension control increases vehicle and implement stability and operation and operator comfort.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A vehicle (100, 200) comprising:
a chassis (215);
a first damper (220A) at a first location of the chassis;
a second damper (220B) at a second location of the chassis;
a sensor (250);
machine-readable instructions (500, 632); and
programmable circuitry (300, 612) to execute the machine-readable instructions to:
identify an event based on at least one of data provided by the sensor, the event indicative of a change in motion of the chassis;
determine a first damping force to be applied by the first damper based on the event;
cause the first damper to apply the first damping force at the first location of the chassis;
determine a second damping force to be applied by the second damper based on the event; and
cause the second damper to apply the second damping force at the second location of the chassis, the second damping force applied independently of the first damping force.

2. The vehicle of claim 1, wherein the sensor is an inertial measurement unit (IMU) sensor.

3. The vehicle of any of claims 1 or 2, wherein the programmable circuitry is to execute the machine-readable instructions to:
determine a roll rate of the chassis;
compare the roll rate to a threshold roll rate; and
identify the event when the roll rate meets or exceeds the threshold roll rate.

4. The vehicle of claim 3, wherein the threshold roll rate is about four degrees per second.

5. The vehicle of any of claims 1-4, wherein the programmable circuitry is to execute the machine-readable instructions to:
determine a pitch rate of the chassis;
compare the pitch rate to a threshold pitch rate; and
identify the event when the pitch rate meets or exceeds the threshold pitch rate.

6. The vehicle of claim 5, wherein the threshold pitch rate is about four degrees per second.

7. The vehicle of any of claims 1-6, wherein the programmable circuitry is to execute the machine-readable instructions to:
determine a yaw rate of the chassis;
compare the yaw rate to a threshold yaw rate; and
identify the event when the yaw rate meets or exceeds the threshold yaw rate.

8. The vehicle of claim 7, wherein the threshold yaw rate is about four degrees per second.

9. The vehicle of any of claims 1-8, wherein the programmable circuitry is to execute the machine-readable instructions to:
determine a deceleration rate or an acceleration rate of the chassis;
compare the deceleration rate or the acceleration rate to a threshold rate; and
identify the event when the deceleration rate or the acceleration rate meets or exceeds the threshold rate.

10. The vehicle of claim 9, wherein the threshold rate is about two meters per second squared.

11. The vehicle of any of claims 1-10, wherein the programmable circuitry is to execute the machine-readable instructions to suspend application of skyhook suspension control when the event is identified.

12. The vehicle of any of claims 1-11, wherein the first damping force and the second damping force are different.

13. A non-transitory machine-readable storage medium (600) comprising instructions that, when executed, cause at least one processor circuit (300, 612) to:
identify an event based on data provided by a sensor (250) coupled to a vehicle (100, 200), the event indicative of a change in motion of a chassis (215) of the vehicle;
determine a first damping force to be applied by the first damper (220A) based on the event;
cause the first damper to apply the first damping force at the first location of the chassis;
determine a second damping force to be applied by the second damper (220B) based on the event; and
cause the second damper to apply the second damping force at the second location of the chassis, the second damping force applied independently of the first damping force.

14. The non-transitory machine-readable medium of claim 13, wherein the instructions, when executed, are to cause the at least one processor circuit to:
determine a rate of change of a position of the chassis;
compare the rate of change to a threshold rate; and
identify the event when the rate of change meets or exceeds the threshold rate.

15. A method to stabilize a vehicle chassis (215), the method comprising:
identifying an event based on data provided by a sensor (25) coupled to a vehicle (100, 200), the event indicative of a change in motion of a chassis of the vehicle;
determining a first damping force to be applied by the first damper (220A) based on the event;
causing the first damper to apply the first damping force at the first location of the chassis;
determining a second damping force to be applied by the second damper (220B) based on the event; and
causing the second damper to apply the second damping force at the second location of the chassis, the second damping force applied independently of the first damping force.
